Europäisches Patentamt

European Patent Office

Office européen des brevets

(11) Veröffentlichungsnummer: **0 477 655 A1**

# EUROPÄISCHE PATENTANMELDUNG

(21) Anmeldenummer: **91115327.8**

(22) Anmeldetag: **11.09.91**

(51) Int. Cl.5: **B65G 69/00**

(30) Priorität: **25.09.90 DE 4030252**

(43) Veröffentlichungstag der Anmeldung:
**01.04.92 Patentblatt 92/14**

(84) Benannte Vertragsstaaten:
**AT BE CH DE DK ES FR GB IT LI NL SE**

(71) Anmelder: **Alten, Kurt**
**Ringstrasse 14**
**W-3015 Wennigsen(DE)**

(72) Erfinder: **Alten, Kurt**
**Ringstrasse 14**
**W-3015 Wennigsen(DE)**

(74) Vertreter: **Depmeyer, Lothar et al**
**Auf der Höchte 30**
**W-3008 Garbsen 1(DE)**

(54) **Verformbare Dichtung des Spaltes zwischen dem Rand einer Gebäudeöffnung und dem Heck eines an diese herangefahrenen Fahrzeuges.**

(57) Die Erfindung bezieht sich auf eine Dichtung der obigen Art, bei der eine verformbare Schürze zur Anlage an das Fahrzeug vorgesehen ist, die zu beiden Seiten der Gebäudeöffnung (2) befindliche, senkrechte Streifen (4) aufweist. Um unerwünschte Verformungen der seitlichen Streifen auszuschliessen, sind erfindungsgemäss die senkrechten Streifen im Bereich ihres oberen Endes versteift, und die versteiften Teile sind dabei um eine waagerechte Achse (16) ver-stellbar und in einer gewünschten Lage feststellbar.

Fig. 1

EP 0 477 655 A1

Die Erfindung geht aus von einer verformbaren Dichtung des Spaltes zwischen dem Rand einer Gebäudeöffnung und dem Heck eines an diese herangefahrenen Fahrzeuges mit einer im Abstand vom Gebäude angeordneten verformbaren Schürze aus einem oben gelegenen Querteil und zwei zu beiden Seiten der Gebäudeöffnung angeordneten senkrechten Streifen, die an der Stirnseite eines am Gebäude verankerten, elastisch nachgiebigen Tragkörpers befestigt sind, wobei je ein Streifen und ein Tragkörper ein Seitenteil der Dichtung bilden.

Durch die Befestigung der Streifen vorne an den Tragkörpern ergeben sich Seitenteile, die - im waagerechten Schnitt gesehen - eine L-förmige Querschnittsform haben. Da das Seitenteil aber nur am Ende eines Schenkels am Gebäude befestigt ist, besteht bei einer solchen Ausbildung und Befestigung die Gefahr, dass sich das Seitenteil zur Seite hin neigt, und zwar in seinem unterem Bereich seitlich nach aussen auswandert. Dies ist im wesentlichen darauf zurückzuführen, dass dem vorerwähnten Seitenteil der Dichtung eine ausreichende Querstabilität fehlt.

Der Erfindung liegt im wesentlichen die Aufgabe zugrunde, die eingangs erwähnten Dichtungen mit dem vorgenannten Seitenteil so zu verbessern, dass unerwünschte Verformungen der Seitenteile, insb. nachteilige Lateralbewegungen und die damit verbundenen Verwerfungen und Faltenbildungen ausgeschaltet werden.

Zur Lösung dieser Aufgabe sind erfindungsgemäss die senkrechten Streifen im Bereich ihres oberen Endes versteift und die Versteifungen sind um eine waagerechte, senkrecht zu den Streifen verlaufende Achse verschwenkbar und in einer verschwenkten Stellung fixierbar. Zweckmässigerweise sind die versteiften Abschnitte der Streifen vorne an Wandkonsolen befestigt und dort verschwenkbar gelagert.

Die Versteifung und die Verschwenkbarkeit der Streifen ermöglichen es, in die Streifen eine Vorspannung einzuleiten, die der durch das Auswandern bedingten Spannung entgegenwirkt. Der dabei in die Streifen eingeleitete Zug verhindert aber auch eine Faltenbildung der Streifen und eine Verformung der elastisch verformbaren Tragkörper für die Streifen. Da nunmehr Faltenbildungen bei nicht beaufschlagter Dichtung ausgemerzt sind, kann auch eine verbesserte Dichtungswirkung eintreten.

Um eine Versteifung herbeizuführen wird ein oben gelegener Abschnitt der Streifen vorzugsweise zusammen mit einem Abschnitt eines Bezuges für den Tragkörper zwischen Metallplatten eingespannt, die dann über Verschraubungen um die erwähnte waagerechte Achse begrenzt verschwenkbar angeordnet und durch weitere Schrauben in der verschwenkten Stellung fixierbar sind.

Weitere Einzelheiten der Erfindung werden anhand der Zeichnung erläutert, in der ein Ausführungsbeispiel der Erfindung dargestellt ist. Es zeigen :

Fig. 1 die linke Hälfte einer Dichtung der eingangs erwähnten Art in schaubildlicher Darstellung,

Fig. 2 die links gelegene, obere Ecke der Dichtung in der Stirnansicht, und zwar in Richtung des Pfeiles II gesehen und

Fig. 3 einen Teilschnitt nach der Linie III - III von Fig. 1.

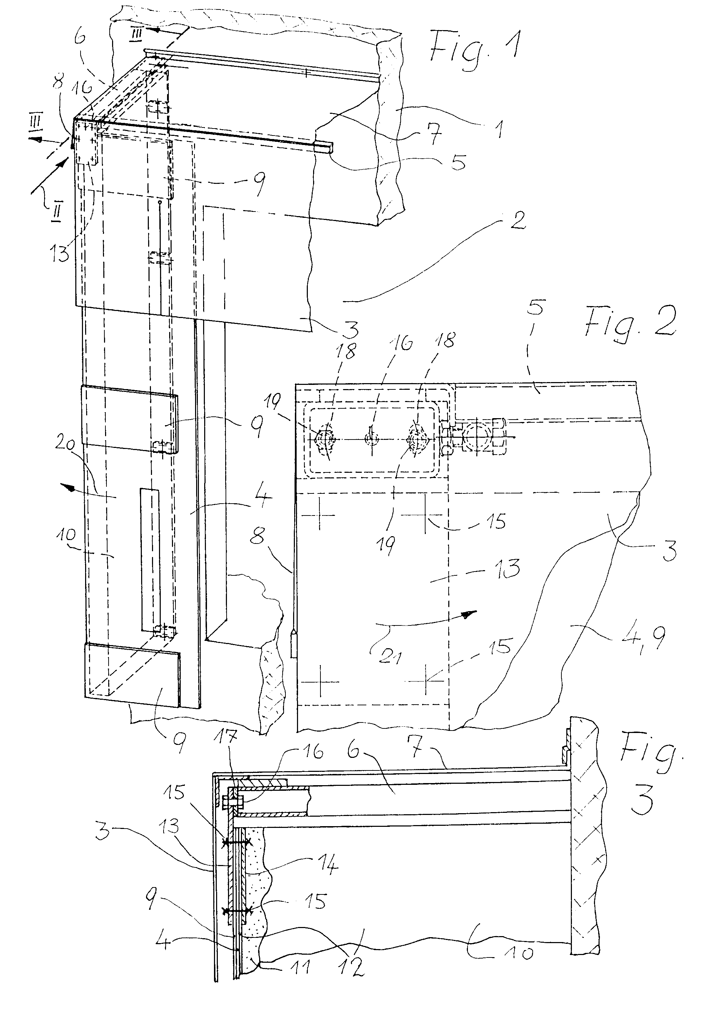

Im Abstand von der Wandung 1 eines Gebäudes z.B eines Lagerhauses mit einer Gebäudeöffnung 2 befindet sich eine verformbare Schürze aus einem oben gelegenen Querteil 3 und zwei zu beiden Seiten der Gebäudeöffnung 2 befindlichen senkrechten Streifen 4. Die Streifen 4 und das Querteil bestehen aus einem folienartigen, zugfesten Schürzenstoff z.B. einem mit Gummi oder Kunststoff behandelten biegsamen Gewebe, damit sich die Schürze an die Kontur eines angedockten Fahrzeuges weitgehend anpassen kann.

Das Querteil 3 hängt gardinenartig herab und ist oben mit einem Querträger 5 verbunden, dessen Enden auf einer an der Wandung 1 verankerten Konsole 6 aufliegen. Der Raum zwischen dem Querträger 5 und der Wandung ist durch eine Dachplane 7 überbrückt, die seitlich noch einen kleinen Überhang 8 hat.

Die beiden Streifen 4, die stellenweise durch eine biegsame, folienartige Abdeckung 9 verstärkt sein können, sind vorne bzw. an der Stirnfläche von im Querschnitt rechteckigen Tragkörpern 1o befestigt, die gebäudeseitig verankert sind. Diese Tragkörper bestehen aus einem weich eingestellten Block aus Kunststoffschaum od. dgl., der mit 11 bezeichnet und von einer folienartigen Abdeckung 12 eingeschlossen ist. Am oberen Ende der Streifen 4 - jeweils in der Ecke der Dichtung - sind zwei steife z.B. aus Stahl bestehende Platten 13, 14, zwischen denen die Streifen 4, die Abdeckung 9 und der Bezug 12 eingefasst und eingespannt sind. Dazu sind Spannschrauben 15 vorgesehen. Darüber hinaus überragt die vorne gelegene Platte 13 die Streifen 4 und die zugehörigen Blöcke 11. Mit dem überstehenden Teil ist die Platte 13 mit einem senkrecht zu den Streifen 4 verlaufenden, waagerechten Bolzen 16 an der Stirnplatte 17 der Konsole 6 befestigt. Konzentrisch zu diesem Bolzen 16 verlaufen gebogene Langlöcher 18, durch die an der Platte 13 befestigte Schrauben 19 hindurchgeführt sind. Die Platte 13 kann daher um die durch den Bolzen 16 bestimmte Achse verschwenkt und durch die Schrauben 19 festgesetzt bzw. fixiert werden.

Geht man davon aus, dass durch die L-förmige Gestalt eines Seitenteils ( Streifen 4 und Tragkörper 1o ) und der Befestigung des Seitenteils durch die Tragkörper 1o eine Aufhängung des Seitenteils praktisch oberhalb des Schwerpunktes des Seitenteils nicht möglich ist, so muss mit der Neigung zu einem seitlichen Auswandern im Sinne des Pfeiles 2o gerechnet werden. Um derartige Verlagerungen und die damit verbundenen Verzerrungen auszuschliessen, wird die Platte 13 gegen die durch den Pfeil 2o bestimmte Drehrichtung verstellt, um so in das Seitenteil eine das Auswandern und Verformen unterbindende Vorspannung einzuleiten. Die Verschwenkung der Platte 13 erfolgt somit im Sinne des Pfeiles 21.

Das Mass der Verschwenkung im Sinne des Pfeiles 21 erfolgt an Ort und Stelle, also nach der Montage der Dichtung durch Lösen und Anziehen der Schrauben 19. Gute Anhaltspunkte bei der Einstellung der Platte 13 bietet der Zustand der Streifen 4, die derart unter Spannung gesetzt werden sollten, dass Faltenbildungen weitgehend ausgeschlossen sind.

Wichtig ist, dass die Versteifung der Seitenteile seitlich aussen - bewirkt durch die Platten 13, 14 - die Verformbarkeit des Seitenteils im übrigen nicht beeinflusst.

**Patentansprüche**

1. Verformbare Dichtung des Spaltes zwischen dem Rand einer Gebäudeöffnung und dem Heck eines an diese herangefahrenen Fahrzeuges mit einer im Abstand vom Gebäude angeordneten, verformbaren Schürze aus einem oben gelegenen Querteil und zu beiden Seiten der Gebäudeöffnung angeordneten, senkrechten Streifen, die an der Stirnseite eines am Gebäude verankerten, elastisch nachgiebigen Tragkörpers befestigt sind, wobei je ein Streifen und ein Tragkörper ein Seitenteil der Dichtung bilden, dadurch gekennzeichnet, dass die senkrechten Streifen (4) im Bereich ihres oberen Endes versteift und die Versteifungen um eine waagerechte, senkrecht zu den Streifen verlaufende Achse (16) verschwenkbar und in einer verschwenkten Stellung fixierbar sind.

2. Dichtung nach Anspruch 1, dadurch gekennzeichnet, dass die versteiften Bereiche der senkrechten Streifen (4) an Wandkonsolen (6) begrenzt verschwenkbar gelagert sind.

3. Dichtung nach Anspruch 2, dadurch gekennzeichnet, dass zur Lagerung eine an der Stirnseite der Wandkonsole (6) befindliche Stirnplatte (17) dient.

4. Dichtung nach Anspruch 1, dadurch gekennzeichnet, dass zur Versteifung und Lagerung zwei aus Metall od. dgl. bestehende Platten (13,14) dienen, die durch Schrauben (15) od. dgl. miteinander verbunden sind und einen Abschnitt der Streifen (4) zwischen sich einschliessen.

5. Dichtung nach Anspruch 1, dadurch gekennzeichnet, dass die Tragkörper (1o) umschliessenden Bezüge (12) mit den versteiften Bereichen der Streifen (4) fest verbunden sind.

6. Dichtung nach 4 und 5, dadurch gekennzeichnet, dass die Platten (13,14) auch Abschnitte der Bezüge (12) zwischen sich erfassen.

7. Dichtung nach Anspruch 4, dadurch gekennzeichnet, dass eine der beiden Platten die andere nach oben überragt und im überstehenden Teil von einem Bolzen (16) der Wandkosole (6) durch-setzt ist.

8. Dichtung nach Anspruch 4 und 7, dadurch gekennzeichnet, dass der überstehende Teil ein oder mehrere gebogene, konzentrisch zur Achse (16) verlaufende Langlöcher (18) aufweist, die von Schraubbolzen (19) der Wandkonsole (6) durchsetzt sind.

9. Dichtung nach Anspruch 1, dadurch gekennzeichnet, dass die Versteifungen - bei Betrachtung der Dichtung von vorne - im Bereich der seitlich aussen gelegenen Ränder der Streifen (4) vorgesehen sind.

10. Dichtung nach Anspruch 1 und 2, dadurch gekennzeichnet, dass die Wandkonsolen (6) zur Lagerung der freien Enden eines zur Aufhängung des Querteils (3) benutzten Querträgers (5) dient, von dem aus sich eine Dachplane (7) zum Gebäude hin erstreckt.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 258 779  (ALTEN) <br> * Spalte 1, Zeilen 4 - 46 * <br> — — — | 1 | B 65 G 69/00 |
| A | EP-A-0 176 751  (ALTEN) <br> * Seite 1, Zeile 18 - Seite 2, Zeile 25 * <br> — — — | 1 | |
| A | DE-U-8 911 045  (HÜBNER) <br> * Anspruch 1; Figur 1 * <br> — — — — — | 1 | |

| | RECHERCHIERTE SACHGEBIETE (Int. Cl.5) |
|---|---|
| | B 65 G <br> E 06 B |

Der vorliegende Recherchenbericht wurde für alle Patentansprüche erstellt

| Recherchenort | Abschlußdatum der Recherche | Prüfer |
|---|---|---|
| Berlin | 30 Dezember 91 | SIMON J J P |